## Europäisches Patentamt

## European Patent Office

## Office européen des brevets

(19)

(11) Veröffentlichungsnummer: **0 065 677**

**A2**

(12)

# EUROPÄISCHE PATENTANMELDUNG

(21) Anmeldenummer: **82103886.6**

(22) Anmeldetag: **05.05.82**

(51) Int. Cl.³: **B 23 P 1/12**

(30) Priorität: **25.05.81 DE 3120729**

(43) Veröffentlichungstag der Anmeldung:
**01.12.82 Patentblatt 82/48**

(84) Benannte Vertragsstaaten:
**AT BE CH FR GB IT LI LU NL SE**

(71) Anmelder: **Friedrich Deckel Aktiengesellschaft**
**Plinganserstrasse 150**
**D-8000 München 70(DE)**

(72) Erfinder: **Seerieder, Karl, Ing. (grad.)**
**Ahornstrasse 4a**
**D-8038 Gröbenzell(DE)**

(54) **Verfahren und Einrichtung zum Funkenerodieren mit zyklisch wiederholter Abhebung der Elektrode.**

(57) Elektroerosionsverfahren und -einrichtung mit zyklisch wiederholter Abhebung der Elektrode zu Spülzwecken. wobei über ein summierendes Zeitglied die tatsächliche Erodierzeit je Zyklus festlegbar ist. Dabei werden auch Unterbrechungen infolge einer Reaktion der Elektrode auf Kurzschlusse u. dgl. berücksichtigt. Die gesamte Zykluszeit ergibt sich als Summe von Abhebezeit, erneuter Zustellzeit und tatsächlicher Erodierzeit zuzüglich evtl. Abhebungen infolge Kurzschluß u. dgl.

FIG. 2

EP 0 065 677 A2

## Verfahren und Einrichtung zum Funkenerodieren mit zyklisch wiederholter Abhebung der Elektrode

Die Erfindung betrifft ein Elektroerosionsverfahren - sowie eine Einrichtung zur Durchführung dieses Verfahrens - mit zyklisch wiederholter Abhebung der Elektrode vom Werkstück zu Spülzwecken, wobei die Abhebezeitdauer und die Geschwindigkeit für die erneute Zustellung einstellbar sind.

Die gesamte Arbeitszeit eines Zyklus teilt sich in drei Phasen auf, nämlich die tatsächliche Erodierzeit, die Abhebezeit sowie die Zeit für die erneute Zustellung der Elektrode an den Funkenspalt. Bei den bisher bekannten Verfahren bzw. Einrichtungen kann man die gesamte Zykluszeit einstellen sowie zusätzlich und unabhängig davon die Abhebezeit, wobei sich über die Abhebegeschwindigkeit auch der Abhebeweg ergibt. Die Zustellzeit ist wiederum eine Folge des erreichten Abheweges und der Zustellgeschwindigkeit, die sich aus der Dynamik des Antriebes sowie aus bestimmten einstellbaren Prozessdaten ergibt. Die tatsächliche Erodierzeit eines Zyklus, die nach Ablauf der Abhebephase und der Phase der erneuten Zustellung bis zum Ende der zeitlich vorgewählten Zykluszeit noch verbleibt, kann deshalb bei ungünstiger Wahl der Abhebezeit und der Zustellgeschwindigkeit sehr kurz oder sogar Null werden. Dabei kann sogar der Fall eintreten, daß die Elektrode das Werkstück nicht mehr erreicht, sondern im Rhythmus der eingestellten Zykluszeit immer weiter abhebt. Außerdem kann die tatsächliche Erodierzeit von Zyklus zu Zyklus variieren, da sie üblicherweise durch Reaktionen der Maschine auf Kurzschlüsse oder Lichtbogen unregelmäßig unterbrochen wird.

Es hat sich gezeigt, daß vor allem der letztgenannte
Effekt, nämlich die ungleiche Dauer der tatsächlichen
Erodierzeit der einzelnen Zyklen, in hohem Maße verantwortlich für ungenügende Oberflächengüte ist.

Es ist die Aufgabe der vorliegenden Erfindung, ein Verfahren sowie eine Einrichtung zur Durchführung dieses Verfahrens zu schaffen, mit dem unabhängig von nicht zu beeinflussenden Prozessdaten eine hohe Oberflächengüte erreicht
werden kann.

Diese Aufgabe ist erfindungsgemäß durch die im Kennzeichen
des Anspruches 1 bzw. des Anspruches 4 enthaltenen Merkmale
gelöst.

Dabei wird nicht mehr die gesamte Zykluszeit vorgegeben,
sondern zunächst die tatsächliche Erodierzeit vom Zeitpunkt
des Erodierbeginns, der abfragbar ist, auf einen bestimmten,
technologisch günstigen Wert eingestellt, die dann auf jeden
Fall in jedem Zyklus erreicht wird. Die Abhebezeit ist
ebenfalls nach wie vor einstellbar. Die Zeit für die erneute Zustellung ergibt sich wiederum aus dem bei Abhebung
erreichten Abhebeweg sowie der Zustellgeschwindigkeit,
und zwar ohne zeitliche Begrenzung durch eine gegebenenfalls zu kurz gewählte Zyklusdauer. Das heißt, daß sich
die Zykluszeit als Summe von tatsächlicher Erodierzeit,
Abhebe- und Zustellzeit ergibt.

Durch die in jedem Zyklus stets gleich lange, optimal gewählte Erodierzeit wird eine wesentliche Verbesserung der
Oberflächengüte erreicht.

Nach einem Merkmal der Erfindung ist vorgesehen, daß der
Erodierbeginn nach der Zustellung abgefragt und die Erodierzeit mittels eines Zeitgliedes festgelegt wird. Das geschieht beispielsweise durch Vorgabe einer Zeitspanne, die unter Berücksichtigung von Unterbrechungen (z. B. infolge eines Elektrodenrückzuges bei einem Kurzschluß und dergleichen) erreicht werden muß, bis das Zeitglied den Abhebevorgang freigibt.

Nach einem weiteren Merkmal der Erfindung ist auch die Abhebezeit mittels eines Zeitgliedes einstellbar, wie an sich schon bekannt. Dieses Zeitglied kann auf eine feste Zeit einstellbar sein, da keine Unterbrechungen des Vorganges wie bei der Regelung der Erodierzeit vorkommen. Im allgemeinen bestimmt sich die Abhebegeschwindigkeit durch eine feststehende Grundgeschwindigkeit sowie eine zusätzliche, von der Differenz zwischen einer wählbaren Sollspannung und der Kurzschlußspannung abhängige Geschwindigkeit, kann aber auch unabhängig von technologischen Daten absolut festgelegt sein.

Die Zustellgeschwindigkeit ergibt sich im allgemeinen aus der Differenz zwischen der oben angegegebenen Sollspannung und der Spaltspannung bei offenem Erodierspalt, so daß sich in Verbindung mit dem erreichten Abhebeweg auch die Zustellzeit zwangsläufig ergibt. Mit dem erneuten Einsetzen des Erodiervorganges ist der Zyklus abgeschlossen und ein neuer Zyklus beginnt.

Zur Durchführung des obenbeschriebenen Verfahrens ist erfindungsgemäß eine Einrichtung vorgesehen, welche Mittel zum Abfragen des Erodierbeginns, Mittel zur Messung und Einstellung der effektiven Erodierzeit sowie in an sich bekannter Weise Mittel zur Festlegung der Abhebezeit und der Zustellgeschwindigkeit umfaßt. Die Mittel zum Abfragen, Messen und Einstellen sind im wesentlichen von einem durch eine veränderliche Steuerspannung steuerbaren Oszillator sowie einen durch den Erodierstrom aktivierten Impulszähler gebildet. Der Impulszähler ist auf eine bestimmte, feststehende Impulszahl eingerichtet, nach deren Erreichen der Abhebevorgang freigegeben wird. Die Impulsfrequenz ist über die Steuerspannung veränderbar und so die Erodierzeit einstellbar.

Zur Steuerung der Abhebezeit dient ein RC-Glied, dessen Zeitkonstante, welche die Abhebezeit bestimmt, mit Hilfe eines veränderbaren Widerstandes verändert werden kann.

Ein Ausführungsbeispiel der Erfindung ist in der Zeichnung dargestellt und im folgenden näher beschrieben. Es zeigen:

Fig. 1 ein Weg-Zeit-Diagramm für den Pinolenweg bei einem herkömmlichen Verfahren zur Steuerung der zyklischen Abhebung der Elektrode;

Fig. 2 ein Weg-Zeit-Diagramm gemäß Fig. 1 für das erfindungsgemäße Verfahren;

Fig. 3 ein Blockschaltbild für eine Einrichtung zur Durchführung des Verfahrens gemäß Fig. 2.

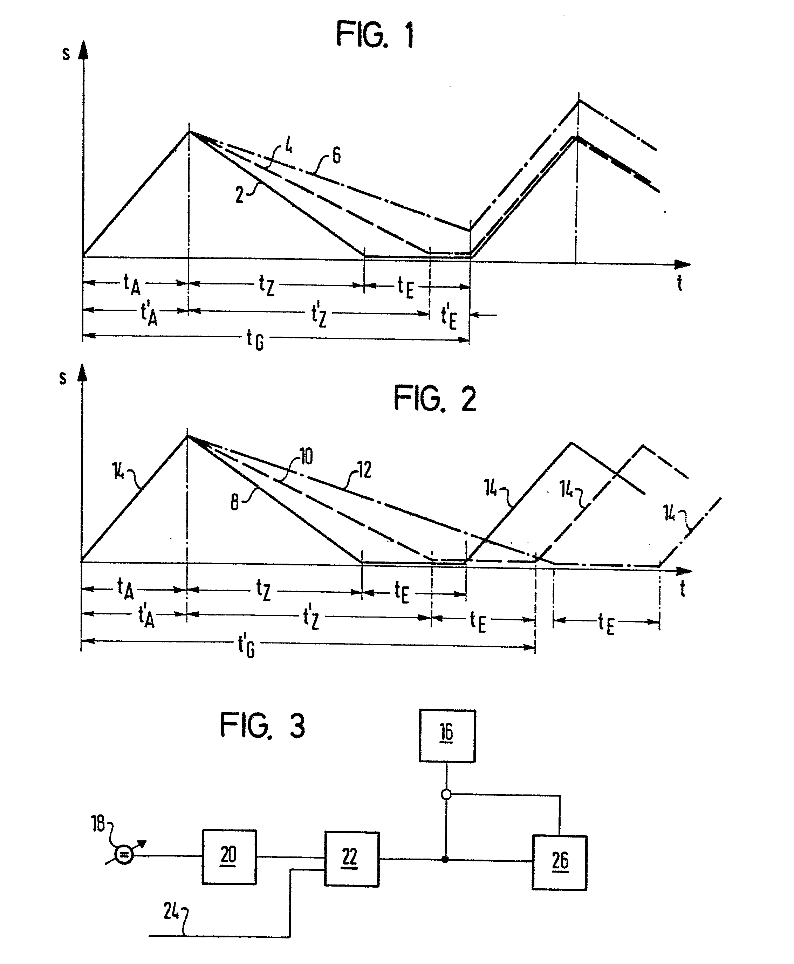

Das in Fig. 1 dargestellte Diagramm zeigt den Weg $\underline{s}$ der Pinole bzw. der davon gehaltenen Elektrode einer herkömmlichen Funkenerodiermaschine über der Zeit $\underline{t}$. Die gesamte Zeit eines sogenannten Zyklus - das ist die Zeit von einem Abhebevorgang zum nächsten - ist $t_G$. Diese setzt sich zusammen aus der Abhebezeit $t_A$, der Zeit der erneuten Zustellung $t_Z$ sowie der tatsächlichen Erodierzeit $t_E$.

Die Abhebezeit $t_A$ ist einstellbar und bleibt dann im wesentlichen konstant, wenn man davon absieht, daß in manchen bekannten Anlagen einem festen Zeitanteil noch ein meist kleiner, von der Differenz zwischen der Kurzschlußspannung und der eingestellten Spaltspannung abhängiger Zeitanteil überlagert ist. Aus dieser festen Abhebezeit und der ebenfalls feststehenden Abhebegeschwindigkeit ergibt sich dann auch der Abhebeweg zwangsläufig.

Die Zustellzeit $t_Z$ hängt ganz von der eingestellten Spaltspannung bzw. der Differenz zur maximalen Spannung bei offenem Spalt ab und wird insofern von der Bedienungsperson für einen bestimmten Bearbeitungsvorgang gewählt. Als Drittes wird die gesamte Zykluszeit $t_G$ vorgewählt; diese bleibt während des ganzen Bearbeitungsvorganges gleich.

Wie aus Fig. 1 hervorgeht, hängt es ganz von der richtigen Wahl der Einstellparameter ab, wie groß die abhängige Erodierzeit $t_E$ wird bzw. ob es überhaupt noch zum Erodierkontakt kommt. Bei der Zustellkurve 2 ergibt sich eine ausreichende Erodierzeit $t_E$. Bei der flacher verlaufenden Zustellkurve 4 ergibt sich die im Verhältnis zur Zykluszeit $t_G$ sehr kurze Erodierzeit $t'_E$. Wird die Zustellkurve noch flacher (Kurve 6), so kommt bis zum Ende der Zykluszeit $t_G$ überhaupt kein Erodierkontakt mehr zustande; das Abheben beginnt, bevor die Elektrode ihre Erodierstellung erreicht hat, so daß im allgemeinen die Elektrode im Rhythmus des Zyklus sich immer weiter vom Werkstück entfernt.

Ein weiterer Nachteil entsteht dadurch, daß auch während der Erodierzeit $t_E$ gelegentliche kurze Abhebebewegungen als Reaktion auf Kurzschlüsse, Lichtbogen o.ä. vorkommen, welche die tatsächliche Erodierzeit pro Zyklus in ganz unregelmäßiger Weise verkürzen. Es hat sich gezeigt, daß diese unregelmäßigen Erodierzeiten sich äußerst schädlich für die Oberflächenqualität des Werkstückes auswirken.

Fig. 2 zeigt ein Diagramm etwa entsprechend der Fig. 1, wobei sich jedoch die tatsächliche Erodierzeit $t_E$ je Zyklus nicht mehr als Restzeit innerhalb der feststehenden gesamten Zykluszeit $t_G$ ergibt, sondern selbst auf einen bestimmten, technologisch günstigen Wert einstellbar ist. Daher ergibt sich unabhängig vom Verlauf der Zustellung eine stets gleichbleibende Erodierzeit $t_E$. Wird beispielsweise gegenüber der Zustellkurve 8 eine flachere Zustellkurve 10 eingestellt, so verlängert sich die gesamte Zykluszeit $t'_G$ um einen Betrag, der es erlaubt, die erwünschte Erodierzeit $t_E$ einzuhalten. Selbst bei einem Zustellverlauf 12, bei welchem im Beispiel gemäß Fig. 1 überhaupt kein Erodierkontakt mehr zustande käme, wird die Erodierzeit $t_E$ erreicht.

Der Erodierbeginn wird durch geeignete Mittel abgefragt und die Erodierzeit durch ein Zeitglied festgelegt. Auf diese Weise beeinflußt auch ein kurzzeitiges Abheben infolge Kurzschlusses o. dgl. die tatsächliche Erodierzeit pro Zyklus nicht, da das Zählglied den Abhebebefehl erst gibt, wenn die vorgewählte tatsächliche Erodierzeit erreicht ist, wie hier im Diagramm nicht näher dargestellt wurde.

Auch die Abhebezeit ist in an sich bekannter Weise wählbar und fest einstellbar, wobei jedoch im Gegensatz zu dem Zeitglied zur Festlegung der tatsächlichen Erodierzeit kein summierendes Zeitglied erforderlich ist, sondern eines, welches einen feststehenden, absoluten Zeitraum bestimmt, da der Abhebevorgang nicht unterbrochen wird. Wie in Fig. 2 gezeigt, ist die Neigung der Abhebekurven 14 immer gleich, da auch die Abhebegeschwindigkeit im wesentlichen konstant ist.

Die Einrichtung zur Durchführung des obenbeschriebenen Verfahrens besteht nach Fig. 3 aus einem Servo- und Erodiergenerator 16, welcher in bekannter Weise den Erodierspalt und die Servomotoren etc. mit elektrischer Leistung versorgt. Das Zeitglied zur Steuerung der tatsächlichen Erodierzeit umfaßt eine regelbare Steuerspannungsquelle 18, welche die Frequenz eines spannungsgesteuerten Oszillators 20 steuert. Diesem nachgeschaltet ist eine Zählkette 22, welche eine bestimmte Anzahl von Impulsen des Oszillators zählt und nach Erreichen dieser Anzahl ein Befehlssignal abgibt. Die Freigabe der Zählkette erfolgt über die Leitung 24 vom Erodierspalt her, d. h. nur bei Erodierkontakt erfolgt eine Zählung.

Wenn die eingestellte Impulszahl und damit - je nach Steuerspannung in kürzerer oder längerer Zeit - die eingestellte tatsächliche Erodierzeit erreicht sind, ergeht von der Zählkette 22 eine Koinzidenzmeldung an den Servo- und Erodiergenerator 16, welche ein Abheben der Elektrode und ein Sperren der Leistungsstufe zur Folge hat. Gleichzeitig ergeht ein Signal an das Zeitglied 26, welches die Abhebezeit steuert. Dieses besteht im wesentlichen aus einem regelbaren RC-Glied, d. h. ein Kondensator wird über einen einstellbaren Widerstand aufgeladen und gibt dann ein Signal, welches die Koinzidenzmeldung der Zählkette wieder aufhebt und diese für einen neuen Zählvorgang vorbereitet. Bei vorliegendem Erodierkontakt erfolgt die erneute Freigabe der Zählkette über Leitung 24 und ein neuer Zyklus beginnt.

Die beschriebene Einrichtung garantiert demnach dafür, daß die tatsächliche Erodierzeit je Zyklus gleich bleibt, unabhängig vom Verlauf der Zustellkurve und von der Anzahl der Erodierunterbrechungen infolge Kurzschluß, Lichtbogen usw.

## Patentansprüche:

1. Elektroerosionsverfahren mit zyklisch wiederholter Abhebung der Elektrode vom Werkstück zu Spülzwecken, wobei die Abhebezeit und die Geschwindigkeit für die erneute Zustellung einstellbar sind,

dadurch gekennzeichnet,

daß die Erodierzeit pro Zyklus vom Zeitpunkt des Erodierbeginns auf einen bestimmten Wert ($t_E$) einstellbar ist, wobei sich der gesamte, aus Erodierzeit ($t_E$), Abhebezeit ($t_A$) und Zustellzeit ($t_Z$) gebildete Zyklus ($t_G$) als Summe dieser Zeiten ergibt.

2. Elektroerosionsverfahren nach Anspruch 1, dadurch gekennzeichnet, daß der Erodierbeginn abgefragt und die Erodierzeit ($t_E$) mittels eines Zeitgliedes (20, 22) festgelegt wird.

3. Elektroerosionsverfahren nach einem der Ansprüche 1 oder 2, dadurch gekennzeichnet, daß die Abhebezeit ($t_A$) bei im wesentlichen festgelegter Abhebegeschwindigkeit mittels eines Zeitgliedes (26) einstellbar ist.

4. Einrichtung zur Durchführung des Verfahrens nach den Ansprüchen 1 bis 3, dadurch gekennzeichnet, daß sie Mittel zum Abfragen des Erodierbeginns, Mittel (20, 22) zur Messung und Einstellung der tatsächlichen Erodierzeit ($t_E$) je Zyklus sowie Mittel (26) zur Festlegung der Abhebezeit ($t_A$) und der Zustellgeschwindigkeit umfaßt.

5. Einrichtung nach Anspruch 4, dadurch gekennzeichnet, daß die Mittel zur Messung und Einstellung der tatsächlichen Erodierzeit ($t_E$) pro Zyklus im wesentlichen von einem durch eine veränderliche Steuerspannung steuerbaren Oszillator (20) sowie einen durch den Erodierstrom freigegebenen Impulszähler (22) gebildet sind.

6. Einrichtung nach einem der Ansprüche 4 oder 5, dadurch gekennzeichnet, daß zur Steuerung der Abhebezeit ($t_A$) der Elektrode in an sich bekannter Weise ein regelbares RC-Glied (26) vorgesehen ist.

FIG. 1

FIG. 2

FIG. 3